# EUROPÄISCHE PATENTANMELDUNG

(11) **EP 4 635 295 A1**
(43) Veröffentlichungstag der Anmeldung: **22.10.2025**
(21) Anmeldenummer: 25169827.0
(22) Anmeldetag: 10.04.2025
(51) Int. Cl.: A01M 29/00, A01M 29/10, A01M 29/16, A01M 29/18, A01M 29/24, A01M 31/00, G06V 10/70, A01M 29/26

(54) **SYSTEM UND VERFAHREN ZU EINEM ERKENNEN UND ABWEHREN VON OBJEKTEN AN EINER INDUSTRIEANLAGE**

(30) Priorität: 16.04.2024 DE 102024110671
(71) Anmelder: ProTecBird GmbH, 25813 Husum (DE)
(72) Erfinder: Heinzen, Thorsten, 25813 Husum (DE); Paul, Jan, 25813 Husum (DE); Schröer, Martin, 25813 Husum (DE)
(74) Vertreter: Farago-Schauer, Peter Andreas

(57) **Zusammenfassung**

Die vorliegende Erfindung betrifft ein Abwehrsystem zu einem Erfassen und Abwehren von Objekten (3) in einem Überwachungsraum (13) einer Industrieanlage herum, umfassend:
- eine Vielzahl an Kameraeinheiten (1), die insgesamt den Überwachungsraum (13) abdecken und jeweilige Bilddaten erzeugen;
- eine Vielzahl an Abwehrsignalsendeeinheiten (2), die Steuersignale empfangen und in energiereichere Abwehrsignale umsetzen;
- eine Recheneinheit (5), die die Bilddaten empfängt und die jeweiligen Steuersignale ausgibt, umfassend:
- eine Erkennungs-Applikation, die aus den Bilddaten das jeweilige Objekt (3) und dazugehörige Objektmerkmale erkennt, wie eine Position, eine Form, eine Größe und eine Flugrichtung;
- eine Klassifikations-Applikation, die zum jeweiligen Objekt (3) aus den dazugehörigen Objektmerkmalen eine jeweilige Objektart aus einer Vielzahl an Objektarten bestimmt, und das jeweilige Objekt (3) in Abhängigkeit von der Objektart als relevant oder nichtrelevant klassifiziert;
- eine Abwehr-Applikation, die den relevanten Objekten (3) in Abhängigkeit von der jeweiligen Objektart mindestens eine Abwehrsignalsendeeinheit (2) zuordnet und jeweilige Steuersignale erzeugt.

## Beschreibung

Die vorliegende Erfindung betrifft ein Abwehrsystem zu einem Erfassen und Abwehren von Objekten und dabei bevorzugt von Vögeln in einem Überwachungsraum um eine Industrieanlage herum, wie beispielsweise im Bereich von Windkraftanlagen und Flughäfen.

Industrieanlagen, wie beispielsweise Flughäfen mit besonders sicherheitsrelevanten Start- und Ladebahnen und Windparks sind vor nicht erwünschten Objekten, wie beispielsweise vor Vögeln, Drohnen oder aber auch vor Tieren oder gefährlichen Gegenständen am Boden zu schützen. Dabei gilt eine mögliche Abwehr von solchen Objekten, wie beispielsweise den Vögeln einerseits einem Schutz der Vögel, andererseits aber auch einem Schutz vor Schäden beispielsweise an Triebwerken und sonstigen Geräteteilen der Industrieanlage. Der Begriff Objekt seht also stellvertretend für Vögel und andere Flugobjekte, sowie für Tiere und Geräte oder Fahrzeuge am Boden.

DE 10 2012 215451 A1 offenbart ein System mit einer oder zwei Kameras, die an einer Windkraftanlage befestigt sind, und mit dem Vögel in der Nähe der Windkraftanlage identifiziert werden können. Dabei können eine Größe, eine Position, eine Entfernung und eine Flugbahnrichtung des Vogels bestimmt und ein Warnsignal erzeugt werden. Das Warnsignal kann die Vögel warnen und versuchen, zu verscheuchen, und/oder es kann auch die Windkraftanlage so ansteuern, dass dadurch möglichst keine Kollision zustande kommt. Dabei wird das Warnsignal bevorzugt selektiv und adaptiv an die Vogelart erzeugt. Reaktionen der Vögel auf das jeweilige Warnsignal können dabei bestimmt und im weiteren Verlauf berücksichtigt werden. Schwellwerte für beispielsweise die Größe des Vogels können bei der Erzeugung des Warnsignals auch berücksichtigt werden.

US 2016 0 053 744 A1 offenbart ein System mit einer Vielzahl von Kameras, die an einer Windkraftanlage befestigt sind, um die Vögel in der Nähe der Windkraftanlage zu identifizieren. Im Falle, dass eine Kollision zwischen dem Vogel und der Windkraftanlage zu erwarten ist, wird die Windkraftanlage in einen Zustand gebracht, der die Kollision unter einen vorbestimmten Wahrscheinlichkeitswert bringt. Als Nachteil des Systems kann beispielsweise die relativ große Anzahl an Kameras und deren notwendigerweise hohe Auflösung gesehen werden, die notwendig sind, um Vögel auch in der Ferne genügend gut in Größe, Fluggeschwindigkeit und Flugbahnrichtung bestimmen zu können.

US 2013 249 218 A1 offenbart ein System als Vogel-Antikollisionssystem, das ausgebildet ist, zu verhindern, dass Vögel in Bereiche von Windfarmen oder von Flughäfen fliegen. Dabei werden die Vögel durch eine Vielzahl an Kameras mit entsprechender Bilderkennungssoftware identifiziert und durch Ablenksignale von der Flugbahn abgelenkt. Dabei kommen als die Abwehrsignale akustische Signale, Mikrowellensignale und Lichtsignale in Betracht. Nachteilig sind die jeweils vielen Kameras, die zu installieren sind und die notwendig hohe Auflösung, um einen Abstand zu den Kameras und eine Flugrichtung in Richtung der Kameras mit einer genügenden Genauigkeit zu bestimmen.

Bei akustischen Signalen zu einem Abwehren oder Verscheuchen der Vögel muss einem Anwohnerlärmschutz Rechnung getragen werden.

Die Aufgabe der Erfindung, um die Nachteile aus dem Stand der Technik zu beseitigen, besteht daher in der Bereitstellung eines Abwehrsystems zu einer Erkennung von Objekten, wie beispielsweise von Vögeln oder anderen Flugobjekten, in einem Überwachungsraum, und zu einem Abwehren der Objekte im Überwachungsraum, wobei das System möglichst einfach, effektiv und kostengünstig sein soll.

Die vorstehende Aufgabe wird von einem Abwehrsystem gemäß den Merkmalen des unabhängigen Anspruchs 1 und von einem Verfahren gemäß den Merkmalen des unabhängigen Anspruchs 13 gelöst. Weitere vorteilhafte Ausführungsformen der Erfindung sind in den abhängigen Ansprüchen angegeben.

Erfindungsgemäß wird ein Abwehrsystem zu einem Erfassen und Abwehren von Objekten in einem Überwachungsraum um eine Industrieanlage herum zur Verfügung gestellt, die Folgendes umfasst:
a) eine Vielzahl an Kameraeinheiten, die über einem Bodengebiet der Industrieanlage verteilt sind und mit ihrem jeweiligen Bildbereich insgesamt den Überwachungsraum abdecken und jeweilige Bilddaten erzeugen;
b) eine Vielzahl an Abwehrsignalsendeeinheiten, die über dem Bodengebiet der Industrieanlage verteilt sind und jeweilige Steuersignale empfangen und in energiereichere Abwehrsignale umsetzen; und
c) eine Recheneinheit, die die Bilddaten empfängt und die jeweiligen Steuersignale ausgibt, Folgendes umfassend:
d) eine Erkennungs-Applikation, die ausgebildet ist, aus den Bilddaten das jeweilige Objekt und dazugehörige Objektmerkmale zu erkennen, wie eine Position, eine Form, eine Größe und eine Flugrichtung;
e) eine Klassifikations-Applikation, die ausgebildet ist, zum jeweiligen Objekt aus den dazugehörigen Objektmerkmalen eine jeweilige Objektart von einer Vielzahl an Objektarten zu bestimmen, und das jeweilige Objekt in Abhängigkeit von der Objektart als relevant oder nichtrelevant zu einem Abwehren des Objekts zu klassifizieren; und
f) eine Abwehr-Applikation, die ausgebildet ist, den als relevant klassifizierten Objekten in Abhängigkeit von der jeweiligen Objektart jeweils ein oder mehrere Abwehrsignalsendeeinheiten zuzuordnen und jeweilige Steuersignale für die Abwehrsignale zu erzeugen.

Die mit der Erfindung erzielten Vorteile bestehen darin, dass statt einer Vielzahl an separaten, entkoppelten Abwehrsystemen ein Abwehrsystem vorgestellt wird, bei dem gleich mehrere verteilte Kameraeinheiten und Abwehrsignalsendeeinheiten insgesamt ausgewertet und angesteuert werden können, wobei jeweils diejenigen Kameraeinheiten und diejenigen Abwehrsignalsendeeinheiten für ein erkanntes Objekt verwendet werden können, die möglichst geeignet dafür positioniert und ausgebildet sind, um das Objekt beispielsweise mit einer höheren Auflösung oder weniger abgeschattet erfassen oder bestrahlen zu können als benachbarte andere Kameraeinheiten und/oder Abwehrsignalsendeeinheiten. So können beispielsweise zu einer Kameraeinheit auch eine oder mehrere benachbarte Kameraeinheiten mit verwendet werden, um das jeweilige Objekt mit der dazugehörigen Objektart und mit den dazugehörigen Objektmerkmalen mit einer höheren Wahrscheinlichkeit richtig zu bestimmen. Durch eine Triangulationsauswertung der jeweiligen Bilddaten mehrerer benachbarter Kameraeinheiten kann die Position des Objekts genauer bestimmt werden.

Indem von der Abwehr-Applikation zum jeweiligen als relevant klassifizierten Objekt ein oder mehrere Abwehrsignalsendeeinheiten zugeordnet werden können, können die für das Objekt und die Objektart am besten geeigneten oder nächstliegenden oder zum Objekt hin ausgerichteten und/oder mehrere verteilte Abwehrsignalsendeeinheiten ausgewählt und auf das Objekt konzentriert werden. Das heißt, dass sich eine Intensität des jeweiligen Abwehrsignals verringern kann, um auch beispielsweise Störungen auf die Umwelt und/oder auf Anlieger zu reduzieren. Auch wird das jeweilige Abwehrsignal in Abhängigkeit von der jeweiligen Objektart ausgewählt, wobei für das jeweilige Objekt eine dafür hinterlegte beispielsweise effektivste Frequenz oder Intensität des Abwehrsignals erzeugt werden kann. So können die Objekte in Abgängigkeit von der Objektart am effektivsten abgewehrt oder verscheucht werden. So kann für Vögel als Objektart beispielsweise ein Schall und für Drohnen ein Laserstrahl oder Mikrowellen- oder Radiowellen eingesetzt werden.

Bevorzugt ist die Vielzahl der Kameraeinheiten über eine Bodenteilfläche verteilt, die mindestens 50% oder 75% oder 90% oder 100% des Bodengebiets der Industrieanlage beträgt. Zur Klarheit wird unter der Bodenteilfläche eine Fläche verstanden, die in einem Inneren einer gummiseilartigen Umspannung gebildet wird, die alle Kameraeinheiten insgesamt umspannt. Zur Klarheit wird unter dem Bodengebiet der Industrieanlage ein Bodengebiet verstanden, auf dem die Industrieanlage steht und das einen Umriss aufweist, der einer seilartigen oder wandartigen Umspannung der Industrieanlage entspricht. Dabei ist die wandartige Umspannung der Industrieanlage so zu verstehen, dass die wandartige Umspannung im Wesentlichen senkrecht zum Bodengebiet ist. Die Vielzahl der Kameraeinheiten beträgt mindestens zwei Kameraeinheiten.

Die Abwehrsignalsendeeinheiten umfassen bevorzugt mindestens einen Lautsprecher oder Arrays von Lautsprechern, wobei die Abwehr-Applikation ausgebildet ist, die jeweiligen Lautsprecher der zugeordneten Abwehrsignalsendeeinheiten so phasenversetzt zueinander anzusteuern, dass interferenzmäßig insgesamt eine Richtcharakteristik und eine Intensität eines jeweiligen Schalls so gebildet wird, dass das jeweilige Abwehrsignal am zugehörigen Objekt oder die jeweiligen Abwehrsignale an einer Gruppe der Objekte erzeugt werden. Als Schallfrequenzen kommen bevorzugt 200 - 2300 Hz in Betracht. Die Schallfrequenzen, Schallmuster und eine Intensität des jeweiligen Schalls der Lautsprecher sind bevorzugt pulsierend so ausgebildet, dass Vögel als Objekte so gut wie möglich gestört und verscheucht werden. Andererseits werden auch bevorzugt Frequenzen und Schallmuster verwendet, die für Menschen möglichst verträglich und wenig störend sind.

Die Abwehrsignalsendeeinheiten umfassen bevorzugt mindestens einen Mikrowellen- und/oder Radiosender, wobei die Abwehr-Applikation ausgebildet ist, die jeweiligen Microwellen- und/oder Radiosender der zugeordneten Abwehrsignalsendeeinheiten so anzusteuern, dass eine jeweilige Senderichtung und Intensität einer jeweiligen elektromagnetischen Strahlung so erzeugt wird, dass das jeweilige Abwehrsignal am zugehörigen Objekt oder jeweilige Abwehrsignale an einer Gruppe der Objekte erzeugt werden. Unter dem Mikrowellen- und/oder Radiosender wird ein Störsender verstanden, der elektromagnetische Wellen im Radiofrequenzbereich und/oder im Mikrowellenfrequenzbereich aussendet. Die Mikrowellen- und/oder Radiostrahlung ist bevorzugt so ausgebildet, um Drohnen möglichst gut zu stören und von Ihrer vorbestimmten Richtung abzubringen.

Die Abwehrsignalsendeeinheiten umfassen bevorzugt mindestens einen Laser, wobei die Abwehr-Applikation ausgebildet ist, den oder die Laser der zugeordneten Abwehrsignalsendeeinheiten so anzusteuern, dass die Laserstrahlung mit einer Intensität und Richtung erfolgt, so dass das jeweilige Abwehrsignal am zugehörigen Objekt oder jeweilige Abwehrsignale an einer Gruppe der Objekte vorbestimmt erzeugt wird.

Zur Klarheit wird unter der Erzeugung des Abwehrsignals am jeweiligen Objekt verstanden, dass das Abwehrsignal von der jeweiligen Abwehrsignalsendeeinheit so erzeugt wird, dass das Abwehrsignal schließlich am Objekt mit einer vorbestimmten Intensität und Art wirkt.

Bevorzugt umfasst jeweils mindestens ein Teil der Abwehrsignalsendeeinheiten mindestens einen Lautsprecher und/oder mindestens ein Lautsprecherarray und/oder mindestens einen Mikrowellensender und/oder mindestens einen Laser. Somit können durch verschiedene Arten der Abwehrsignalsendeeinheiten verschiedene Objektarten entsprechend effektiv abgewehrt werden, wobei beispielsweise ein Vogel mit einem andersartigen Abwehrsignal als eine Drohne abgewehrt werden kann.

Zur Klarheit kann bei einer Bestrahlung der Gruppe der Objekte mit den jeweiligen Abwehrsignalen eine vorbestimmt zulässige Abweichung der Intensität des jeweiligen Abwehrsignals von einem Sollwert des jeweiligen Abwehrsignals am jeweiligen Objekt tolerierbar sein. Die Abwehr-Applikation berücksichtigt bei der Erzeugung der Steuersignale und letztlich der Abwehrsignale bevorzugt auch Wind- und Wetterbedingungen, um die Abwehrsignal am jeweiligen Objekt möglichst gut vorbestimmen zu können.

Die Klassifikations-Applikation ist bevorzugt ausgebildet, aus den Bilddaten, die eine Videosequenz bilden, bewegliche Teile des jeweiligen Objekts relativ zum Objekt zu bestimmen, wie beispielsweise bei einem Vogel bewegte Flügel in Bezug zu einem Körperrumpf. Dabei lassen sich eine Bewegungsfrequenz der beweglichen Teile des Objekts bestimmen, wobei die Bewegungsfrequenz bei der Klassifikation der Objektart bevorzugt berücksichtigt wird. Indem als die Bewegungsfrequenz eine Flügelschlagfrequenz von Vögeln bestimmt wird, lassen sich Vogelarten besser voneinander unterscheiden. Beispielsweise können die beweglichen Teile auch Propeller und die Bewegungsfrequenz dabei eine Propellerfrequenz sein, wodurch sich Propellerflugobjekte besser identifizieren lassen.

Die Klassifikations-Applikation ist bevorzugt ausgebildet, aus den Bilddaten, die eine Videosequenz bilden, Bildveränderungen des jeweiligen Objekts und eine davon abgeleitete Bildveränderungsfrequenz der Bildveränderungen zu bestimmen, wobei die Bildveränderungen beispielsweise auch durch Farbveränderungen und/oder ein Blinken einer Signalleuchte erzeugt sein können, und wobei die Bildveränderungsfrequenz bei der Klassifikation der Objektart vorteilhafterweise berücksichtigt wird.

Die Erkennungsapplikation kann bevorzugt ausgebildet sein, zu einem jeweiligen Objekt ein Sich-Annähern an die oder ein Sich-Entfernen von der Industrieanlage zu bestimmen, wobei die Abwehr-Applikation ausgebildet ist, den als relevant klassifizierten Objekten, die sich annähern, ein intensitätsmäßig zeitlich anschwellendes Abwehrsignal und bei den relevanten Objekten, die sich entfernen, ein intensitätsmäßig zeitlich abschwellendes Abwehrsignal zuzuordnen. Zur Klarheit wird unter dem Sich-Annähern verstanden, dass sich das relevante Objekt in Richtung der Industrieanlage oder auf Teile davon bewegt, wobei unter dem Sich-Entfernen verstanden wird, dass sich das relevante Objekt in Richtung von der Industrieanlage weg oder von Teilen davon wegbewegt. Dadurch erhalten Tiere eine bessere Richtungsorientierung, ob sie sich auf eine Gefahrenquelle zubewegen oder von einer Gefahrenquelle wegbewegen, und sie können dadurch besser verscheucht werden.

Die Erkennungsapplikation kann bevorzugt ausgebildet sein, zu einem jeweiligen Objekt das Sich-Annähern an die oder das Sich-Entfernen von der Industrieanlage zu bestimmen, wobei die Abwehr-Applikation ausgebildet ist, den als relevant klassifizierten Objekten, die sich annähern, ein zeitlich sich in der Art veränderndes Abwehrsignal und bei den relevanten Objekten, die sich entfernen, ein zeitlich sich in der Art anders veränderndes Abwehrsignal zuzuordnen. Beispielsweise kann das sich anders verändernde Abwehrsignal invertiert zum sich verändernden Abwehrsignal sein. Beispielsweise ist das sich verändernde Abwehrsignal anschwellend und das sich anders verändernde Abwehrsignal abschwellend oder umgekehrt. Das sich in der Art verändernde Abwehrsignal kann sich beispielsweise zeitlich in der Intensität und/oder in der Frequenz und/oder in der Signalabfolge verändern.

Optional kann die Intensität oder eine Lautstärke auch so erzeugt werden, dass entferntere Objekte mit einer höheren Intensität und/oder Lautstärke und/oder Frequenz bestrahlt werden, im Vergleich zu näheren Objekten. Optional kann die Intensität oder eine Lautstärke auch so erzeugt werden, dass entferntere Objekte mit einer höheren Intensität und/oder Lautstärke und/oder Frequenz bestrahlt werden, im Vergleich zu näheren Objekten.

Die Abwehr-Applikation ist bevorzugt ausgebildet, den relevanten Objekten das jeweilige Abwehrsignal in Abhängigkeit von der zugehörigen Objektart zuzuordnen, wobei das Abwehrsignal einen oder mehrere folgender Signalparameter umfasst: Eine Signalfrequenz, eine Tonabfolge, mehrere Tonabfolgen, eine Tonhöhe, eine anschwellende Signalintensität, eine abschwellende Signalintensität.

Zur Klarheit ist bei einem Erzeugen oder Zuordnen eines Abwehrsignals zu einem Objekt zunächst ein Erzeugen eines Steuersignals oder mehrerer entsprechender Steuersignale gemeint, das/die von der Recheneinheit erzeugt wird/werden, um dann über die zugeordneten Abwehrsignalsendeeinheiten das Abwehrsignal zu erzeugen.

Die Erkennungs-Applikation ist auch bevorzugt ausgebildet, in einer Gruppe von Objekten ein erstes Objekt zu identifizieren, das der Gruppe von Objekten in einer gemittelten Flugrichtung der Gruppe der Objekte leitvogelartig vorausfliegt. Dabei erzeugt die Abwehr-Applikation das mindestens eine Abwehrsignal bevorzugt hauptsächlich für das erste Objekt. Dadurch kann ein Schwarm von Vögeln durch eine Steuerung eines Leitvogels als dem ersten Objekt in der Flugrichtung gesteuert werden.

Die Abwehr-Applikation spart bei der Erzeugung der Abwehrsignale vorbestimmte Bereiche bevorzugt aus oder bestrahlt die vorbestimmten Bereiche mit einer jeweiligen Intensität, die jeweils unterhalb eines jeweiligen vorbestimmten Schwellwerts für die jeweiligen Bereich liegt. Dabei kann der Überwachungsraum in kartierte Bereiche eingeteilt sein, in denen jeweilige maximale Intensitätspegel für das jeweilige Abwehrsignal durch einen entsprechenden Schwellwert nicht überschritten werden. Bevorzugt weisen die vorbestimmten Bereiche unterschiedliche Schwellwerte auf, ebenso ist es aber auch möglich, dass die Schwellwerte für mehrere Bereiche gleich sind. Für manche Bereiche kann der Schwellwert auch Null sein, die beispielsweise freie Trassenräume sind, durch die sich die Objekte hindurchbewegen dürfen. Die vorbestimmten Bereiche können beispielsweise Bereiche von Wohnhäusern sein.

Ein entsprechendes Verfahren zum Abwehren der Objekte im Überwachungsraum um die Industrieanlage herum umfasst folgende Schritte:
a) Installieren der mindestens einen Kameraeinheit über dem Bodengebiet der Industrieanlage, die zur Überwachung des Überwachungsraums Bilddaten erzeugt;
b) Installieren der mindestens einen Abwehrsignalsendeeinheit über dem Bodengebiet der Industrieanlage, die die jeweiligen Steuersignale in die energiereicheren Abwehrsignale umsetzt;
c) Mit der rechnergestützten Erkennungs-Applikation aus den Bilddaten bestimmen des darin abgebildeten jeweiligen Objekts mit den dazugehörigen Objektmerkmalen, wie der Position, der Form, der Größe und der Flugrichtung;
d) Mit der rechnergestützten Klassifikations-Applikation bestimmen der jeweiligen Objektart aus der Vielzahl der Objektarten für das jeweilige Objekt aus den dazugehörigen Objektmerkmalen, und klassifizieren des jeweiligen Objekts in Abhängigkeit der Objektart als relevant oder nichtrelevant zu einem Abwehren des Objekts;
e) Mit der rechnergestützten Abwehr-Applikation zuordnen der einen oder mehrerer Abwehrsignalsendeeinheiten und erzeugen des jeweiligen Abwehrsignals zu dem als relevant klassifizierten Objekt in Abhängigkeit der jeweiligen Objektart und weiterleiten des jeweiligen Abwehrsignals an die mindestens eine Abwehrsignalsendeeinheit.

Bevorzugt wird durch die Erkennungs-Applikation eine Gruppe von Objekten, die im Wesentlichen in einer Flugrichtung fliegen, und darin ein erstes Objekt, das der Gruppe der Objekte leitvogelartig vorausfliegt, erkannt, wobei die Abwehr-Applikation das mindestens eine Abwehrsignal im Wesentlichen für das erste Objekt bestimmt und mindestens ein entsprechendes Steuersignal dafür erzeugt.

Bevorzugt werden durch die Klassifikations-Applikation aus den Bilddaten, die beispielsweise eine Videosequenz bilden, bewegliche Teile des jeweiligen Objekts relativ zum Objekt bestimmt und eine Bewegungsfrequenz der beweglichen Teile des Objekts bestimmt. Dabei wird von der Klassifikations-Applikation die Bewegungsfrequenz bei der Bestimmung der Objektart berücksichtigt.

Wie im Stand der Technik bekannt, ist es auch denkbar, die jeweilige Objektart anhand eines jeweils einzelnen Bildes zu detektieren bzw. klassifizieren, beispielsweise durch die Form und/oder durch die Größe des Objekts.

Bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.

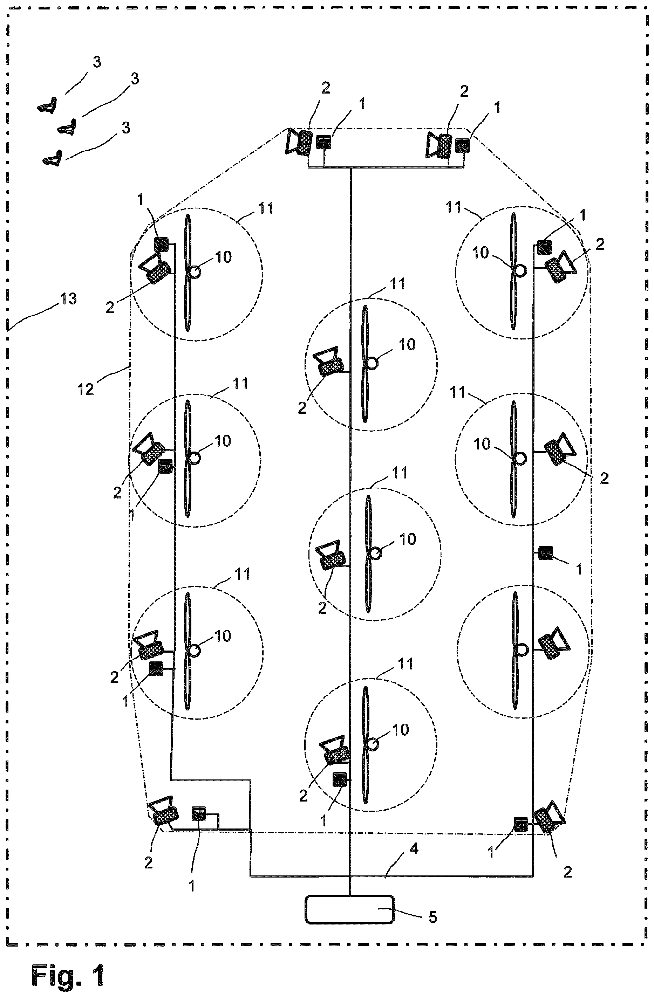

Es zeigen
- Fig. 1: in einer systematischen Draufsicht eine Industrieanlage, die über einem Bodengebiet Windmühlen umfasst und von einer Vielzahl an Kameraeinheiten innerhalb eines Überwachungsraums überwacht wird, indem Bilddaten der Kameraeinheiten an eine Recheneinheit weitergeleitet und dort durch eine Objekterkennung ausgewertet werden, wobei das Bodengebiet auch Abwehrsignalsendeeinheiten umfasst, die von der Recheneinheit angesteuert werden, um mögliche Objekte abzuwehren;

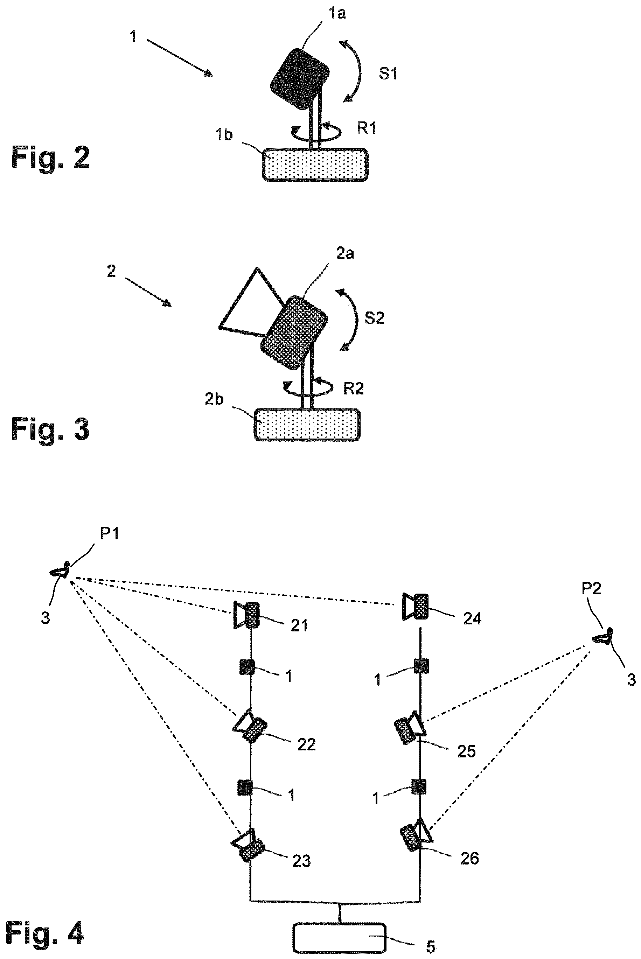

- Fig. 2: in einer Seitenansicht die Kameraeinheit, die einen Kamerasensor umfasst, der von einer ersten Verstelleinheit in einem Schwenk- und Rotationswinkel eingestellt werden kann;
- Fig. 3: in einer Seitenansicht die Abwehrsignalsendeeinheit, die eine Lautsprechereinheit umfasst, die von einer zweiten Verstelleinheit in einem Schwenk- und Rotationswinkel eingestellt werden kann;
- Fig. 4: in einer systematischen Draufsicht eine Vielzahl an Kameraeinheiten und Abwehrsignalsendeeinheiten, die mit der Recheneinheit verbunden sind, wobei ein Objekt an einer Position 1 von bestimmten Abwehrsignalsendeeinheiten bestrahlt wird, und ein anderes Objekt an einer Position 2 von anderen bestimmten Abwehrsignalsendeeinheiten bestrahlt wird; und

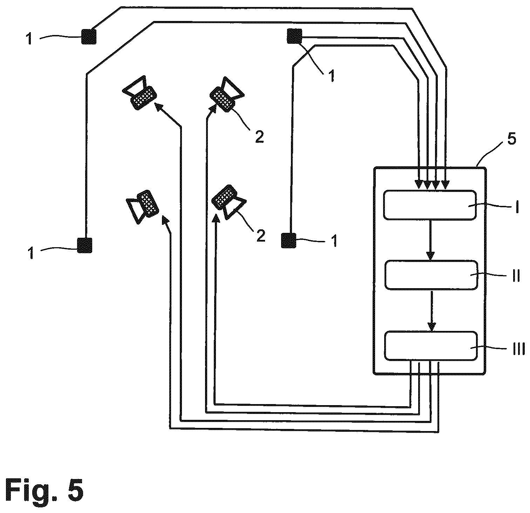

- Fig. 5: in einer systematischen Draufsicht eine Vielzahl an Kameraeinheiten und Abwehrsignalsendeeinheiten, die jeweils mit der Recheneinheit verbunden sind, wobei in der Recheneinheit im Wesentlichen eine Erkennungs-Applikation, eine Klassifikations-Applikation und eine Abwehr-Applikation ablaufen, um ein jeweiliges Objekt mit einer jeweiligen Objektart in den Bilddaten der Kameraeinheiten zu identifizieren, und um ein oder mehrere Steuersignale und über die Abwehrsignalsendeeinheiten entsprechende Abwehrsignale für das jeweilige Objekt zu erzeugen.

### Detaillierte Beschreibung von Ausführungsbeispielen

Die vorliegende Erfindung stellt ein Abwehrsystem dar zu einem Erfassen und Abwehren von Objekten 3 in einem Überwachungsraum 13 um eine Industrieanlage herum, das Folgendes umfasst:
a) eine Vielzahl an Kameraeinheiten 1, die über einem Bodengebiet 12 der Industrieanlage verteilt sind und mit ihrem jeweiligen Bildbereich insgesamt den Überwachungsraum 13 abdecken und jeweilige Bilddaten erzeugen;
b) eine Vielzahl an Abwehrsignalsendeeinheiten 2, die über dem Bodengebiet 12 der Industrieanlage verteilt sind und jeweilige Steuersignale empfangen und in energiereichere Abwehrsignale umsetzen; und
c) eine Recheneinheit 5, die die Bilddaten empfängt und die jeweiligen Steuersignale ausgibt, Folgendes umfassend:
d) eine Erkennungs-Applikation, die ausgebildet ist, aus den Bilddaten das jeweilige Objekt 3 und dazugehörige Objektmerkmale zu erkennen, wie eine Position, eine Form, eine Größe und eine Flugrichtung;
e) eine Klassifikations-Applikation, die ausgebildet ist, zum jeweiligen Objekt 3 aus den dazugehörigen Objektmerkmalen eine jeweilige Objektart von einer Vielzahl an Objektarten zu bestimmen, und das jeweilige Objekt 3 in Abhängigkeit von der Objektart als relevant oder nichtrelevant zu einem Abwehren des Objekts 3 zu klassifizieren; und
f) eine Abwehr-Applikation, die ausgebildet ist, den als relevant klassifizierten Objekten 3 in Abhängigkeit von der jeweiligen Objektart ein oder mehrere jeweilige Abwehrsignalsendeeinheiten 2 zuzuordnen und jeweilige Steuersignale für die Abwehrsignale zu erzeugen.

Wie in Fig. 1 in einer Draufsicht dargestellt kann die Industrieanlage eine Windkraftanlage sein, die eine Vielzahl an Windkraftanlageeinheiten 10 umfassen kann. Dabei sind die Objekte 3 bevorzugt Vögel, die geschützt werden sollen. Unter der Industrieanlage kann auch ein Flugplatz mit startenden und landenden Flugzeugen verstanden werden, die nicht mit den Vögeln oder mit Vögeln bestimmter Objektart kollidieren dürfen. Andere Industrieanlagen können auch in Betracht kommen, wie beispielsweise Kernkraftwerke, die vor Flugobjekten oder am Boden herannahenden Objekten 3 geschützt werden müssen. Als die Objekte 3 kommen Vögel oder Fledermäuse oder auch andere Flugobjekte, wie beispielsweise Drohnen, in Betracht. Als die Objekte 3 können aber auch Tiere am Boden in Betracht kommen, wie beispielsweise Wildschweine oder Wölfe oder Nagetiere, die eine Beschädigungsgefahr für die Industrieanlage sein können.

Bevorzugt sind die Kameraeinheiten 1 oder zumindest ein Teil davon Pan-Tilt-Zoom-Kameraeinheiten, die bevorzugt von der Rechnereinheit 5 oder verteilten Einheiten davon entsprechend angesteuert werden, um den jeweiligen Bildbereich auf ein vorbestimmtes Objekt 3 oder eine Gruppe von vorbestimmten Objekten 3 zu lenken. Dabei kann die jeweilige Pan-Tilt-Zoom-Kameraeinheit auch von einer dazugehörigen ausgelagerten Recheneinheit vorausgewertet und entsprechend angesteuert werden, um den jeweiligen Bildbereich auf das vorbestimmte Objekt 3 oder die Gruppe von vorbestimmten Objekten 3 zu lenken. Die Kameraeinheiten 1 oder ein Teil davon können bevorzugt auch Radareinheiten sein, die die Bilddaten durch empfangene Reflektionen erzeugen. Bevorzugt sind die Kameraeinheiten 1 oder zumindest ein Teil davon auf Teilen der Industrieanlage, wie beispielsweise auf Windkraftanlagetürmen montiert und bevorzugt ansteuerbar schwenkbar und rotierbar, um einen möglichst weiten Bereich abzudecken.

In Fig. 1 ist das Bodengebiet 12 strichliert gezeichnet, das bevorzugt dadurch gebildet wird, indem es von einer wandartigen Umspannung der Industrieanlage begrenzt wird. Der Überwachungsraum 13 erstreckt sich bevorzugt über das Bodengebiet 12 weiter hinaus, um schon herannahende Objekte 3, die sich der Industrieanlage nähern erkennen zu können. Als Kameraeinheiten 1 können dabei sowohl Kameraeinheiten 1 mit einem 360° Bildbereich in Betracht kommen, wie auch solche Kameraeinheiten 1, die dann auf ein von der Recheneinheit 5 zunächst grob erkanntes Objekt 3 mit hoher Auflösung fokussieren und ein möglichst hochauflösendes scharfes Bild des jeweiligen Objekts 3 zu gewinnen.

Bevorzugt erstreckt sich der Überwachungsraum 13 bis zum Boden unter dem Überwachungsraum 13 hin, um auch Objekte 3 wie Tiere am Boden, wie beispielsweise Füchse, Wölfe, Nagetiere erkennen und abwehren zu können.

Bevorzugt sind die Kameraeinheiten 1 mit der Recheneinheit 5 über ein drahtgebundenes oder ein drahtloses Netzwerk verbunden. Ebenso sind die Abwehrsignalsendeeinheiten 2 mit der Recheneinheit 5 bevorzugt über ein weiteres oder das gleiche drahtgebundene oder drahtlose Netzwerk verbunden. Andere, teilweise einzelne Verbindungsmöglichkeiten sind auch vorstellbar, wie beispielsweise in Fig. 5 skizziert.

Die Recheneinheit 5 ist bevorzugt als ein zentrales Rechnersystem aufgebaut. Alternativ dazu kann die Recheneinheit 5 aber auch als ein verteiltes Rechnersystem mit einer Vielzahl an Mikroprozessoreinheiten, die beispielsweise in den Kameraeinheiten 1 enthalten sind, aufgebaut sein. Dabei können Teile der Software-Applikationen in den Kameraeinheiten 1 und/oder in den Abwehrsignalsendeeinheiten 2 liegen. Beispielsweise können in den Kameraeinheiten 1 Tracking-Algorithmen enthalten sein, die die jeweiligen Objekte 3 identifizieren, wobei jeweils einer oder mehrere Objektmerkmale bestimmt und an die Recheneinheit 5 weitergeleitet werden, wie beispielsweise die dazugehörige Position, die Form, die Größe, die Objektart, die Flugrichtung und eine Fluggeschwindigkeit.

Bevorzugt sind die Kameraeinheiten 1 oder zumindest ein Teil davon auf Teilen der Industrieanlage, wie beispielsweise auf den Windkraftanlagetürmen montiert. Bevorzugt sind die Abwehrsignalsendeeinheiten 2 oder zumindest ein Teil davon auf Teilen der Industrieanlage, wie beispielsweise auf den Windkraftanlagetürmen montiert.

Es ist auch denkbar, dass um Teile der Industrieanlage, wie beispielsweise um die Windkraftanlageeinheiten 10 herum Anlagenräume 11 vorbestimmt werden, in die die Objekte 3 sich nicht hineinbewegen dürfen, so dass sich dabei eine Kartierung ergibt mit freien Trassenräumen und nicht freien Anlagenräumen 11. Bei einer solchen Art Anordnung der Anlagenräume 11 erzeugt die Abwehr-Applikation die Steuersignale und Abwehrsignale bevorzugt so, dass sich das jeweilige Objekt 3 möglichst weit von den jeweiligen Anlagenräumen 11 entfernt und in den Trassenräumen bewegt.

In Fig. 2 ist in einer Seitenansicht die Kameraeinheit 1 als eine bevorzugte Pan-Tilt-Kameraeinheit dargestellt, deren Kamerasensor 1a und Optik von einer ersten Verstelleinheit 1b hinsichtlich eines jeweiligen Schwenkwinkels S1 und Rotationswinkels R1 eingestellt werden kann. Darüber hinaus kann bevorzugt eine Zoom-Funktion vorhanden sein, um auf ein entferntes Objekt zu zoomen.

In Fig. 3 ist in einer Seitenansicht die Abwehrsignalsendeeinheit 2 als eine bevorzugte Lautsprechereinheit 2a dargestellt, die von einer zweiten Verstelleinheit 2b in einem entsprechenden Schwenkwinkel S2 und Rotationswinkel R2 eingestellt werden kann. Ein Lautsprecher-Array, das schwenkbar ist, ist ebenso vorstellbar.

In Fig. 4 ist eine beispielartige systematische Anordnung einer Vielzahl an Kameraeinheiten 1 und Abwehrsignalsendeeinheiten 2, die mit der Recheneinheit 5 verbunden sind. Ein von mindestens einer Kameraeinheit 1 abgebildetes und von der Recheneinheit 5 erkanntes Objekt 3 an der Position 1 wird dabei von einer ersten 21, zweiten 22, dritten 23 und einer vierten Abwehrsignalsendeeinheiten 24 mit einem jeweiligen Abwehrsignal bestrahlt, wobei das Objekt 3 an der Position P2 von einer fünften 25 und einer sechsten Abwehrsignalsendeeinheit 26 bestrahlt wird. Die Abwehr-Applikation nimmt dabei die entsprechende Zuordnung der jeweiligen Abwehrsignalsendeeinheiten 2 zu dem jeweiligen Objekt 3 vor. Damit soll deutlich gemacht werden, dass auch eine weiter entfernte Abwehrsignalsendeeinheit 2 zum Objekt 3 zur Abwehr des Objekts 3 mit verwendet werden kann. Beispielsweise kann eine Kameraeinheit 1 auch mit einer eigenen Teilrecheneinheit als ein Teil der Recheneinheit 5 verbunden sein, um die entsprechenden Bilddaten der Kameraeinheit oder Information davon vorverarbeitet an die Recheneinheit 5 weiterzuleiten.

Fig. 5 zeigt nochmals den Verfahrensablauf eines Gewinns der Bilddaten durch die Kameraeinheiten 1, repetitiver Verarbeitungsschritte durch die Recheneinheit 5, und eines Erzeugens der Steuersignale und schließlich der Abwehrsignale durch die Abwehrsignalsendeeinheiten 2.

In einem ersten repetitiven Verarbeitungsschritt I wird durch die rechnergestützte Erkennungs-Applikation aus den Bilddaten das darin abgebildete jeweilige Objekt 3 mit dazugehörigen Objektmerkmalen bestimmt, wie der Position, der Form, der Größe und der Flugrichtung.

In einem zweiten repetitiven Verarbeitungsschritt II wird durch die rechnergestützte Klassifikations-Applikation für das jeweilige Objekt 3 in Abhängigkeit von den dazugehörigen Objektmerkmalen die jeweilige Objektart aus der Vielzahl der Objektarten bestimmt, und in Abhängigkeit von der Objektart das jeweilige Objekts 3 als relevant oder nichtrelevant zu einem Abwehren des Objekts 3 klassifiziert.

In einem dritten repetitiven Verarbeitungsschritt III wird durch die rechnergestützte Abwehr-Applikation zum jeweiligen als relevant klassifizierten Objekt eine Zuordnung von einer oder mehreren jeweiligen Abwehrsignalsendeeinheiten 2 vorgenommen und in Abhängigkeit der jeweiligen Objektart ein entsprechendes jeweiliges Steuersignal erzeugt und weitergeleitet an die zugeordneten Abwehrsignalsendeeinheit 2, um am Objekt 3 das jeweilige Abwehrsignal zu erzeugen.

Es versteht sich, dass die Erkennungs-Applikation die jeweiligen Objekte 3 und Objektmerkmale sowohl auf Basis fest vorbestimmter Klassifikationsparameter als auch auf Basis eines lernenden Systems, wie beispielsweise eines neuronalen Netzwerks erkennen kann. Bekannte Systeme, die auf künstlicher Intelligenz basieren, sind hierbei anwendbar.

Das gleiche gilt für die rechnergestützte Klassifikations-Applikation zur Erkennung der Objektart und der Relevanz oder Nichtrelevant zum Abwehren des jeweiligen Objekts 3. Auch diese Systeme können auf Basis fest vorbestimmter Klassifikationsparameter oder auf Basis eines lernenden Systems, wie beispielsweise eines neuronalen Systems arbeiten. Bekannte Systeme, die auf künstlicher Intelligenz basieren, sind hierbei anwendbar. Die Klassifikations-Applikation kann natürlich auch bekannte Bildverarbeitungsalgorithmen zu einer Bilderkennung umfassen.

Das gleiche gilt auch für die rechnergestützte Abwehr-Applikation zum Zuordnen der Abwehrsignalsendeeinheiten 2 und zur Erzeugung eines Steuersignals oder Abwehrsignals in Abhängigkeit der Objektart. Auch diese Systeme können auf Basis fest vorbestimmter Klassifikationsparameter oder auf Basis eines lernenden Systems arbeiten, und auch hierbei sind bekannte Systeme, die auf künstlicher Intelligenz basieren, anwendbar.

Zur Klarheit sei auch angemerkt, dass unbestimmte Artikel in Verbindung mit einem Gegenstand oder Zahlenangaben, wie beispielsweise "ein" Gegenstand den Gegenstand nicht zahlenmäßig auf genau einen Gegenstand begrenzt, sondern, dass damit gemeint ist, dass mindestens "ein" Gegenstand damit gemeint ist. Dies gilt für alle unbestimmten Artikel wie beispielsweise "ein", "eine" usw.

Es versteht sich, dass wenn ein Element als "auf" einem anderen Element angebracht, damit "verbunden", "gekoppelt" oder "in Kontakt" zu sein bezeichnet wird, das Element sich dann direkt auf dem anderen Element befinden, damit verbunden oder gekoppelt sein kann, oder dass außerdem dazwischenliegende Elemente vorhanden sein können, die entweder nur dazwischen liegen oder das Element mit dem anderen Element verbinden oder koppeln oder in Kontakt halten. Wenn hingegen ein Element als "direkt auf" einem anderen Element, damit "direkt verbunden", "direkt gekoppelt" oder "direkt in Kontakt" bezeichnet wird, ist zu verstehen, dass keine dazwischenliegenden Elemente vorhanden sind. In ähnlicher Weise ist, wenn ein erstes Element als "in elektrischem Kontakt mit einem zweiten Element oder damit "elektrisch gekoppelt" bezeichnet wird, eine elektrische Bahn vorhanden, der den Stromfluss zwischen dem ersten Element und dem zweiten Element ermöglicht. Die elektrische Bahn kann Kondensatoren, gekoppelte Induktivitäten und/andere Elemente einschließen, die auch ohne direkten Kontakt zwischen den leitenden Elementen einen Stromfluss ermöglichen.

Obwohl die Ausdrücke "erstes", "zweites" usw. hierin verwendet werden können, um verschiedene Elemente, Komponenten, Bereiche und/oder Abschnitte zu bezeichnen, sind diese Elemente, Komponenten, Bereiche und/oder Abschnitte nicht durch diese Ausdrücke beschränkt. Die Ausdrücke werden nur verwendet, um ein Element eine Komponente, einen Bereich oder Abschnitt von einem anderen Element einer anderen Komponente, einem anderen Bereich oder Abschnitt zu unterscheiden. Daher kann ein erstes Element, eine erste Komponente, ein erster Bereich oder Abschnitt, die unten behandelt sind, als zweites Element, zweite Komponente, zweiter Bereich oder Abschnitt bezeichnet werden, ohne von den Lehren der vorliegenden Erfindung abzuweichen.

Die in den Figuren dargestellten Bereiche sind schematischer Art, und ihre Formen dienen nicht dazu die genaue Form eines Bereichs einer Vorrichtung darzustellen oder den Schutzumfang der Erfindung zu beschränken.

Zum Begriff "umfassen" sei zur Klarheit gesagt, dass wenn ein erster Vorrichtungsteil einen zweiten Vorrichtungsteil umfasst, dies bedeutet, dass der erste Vorrichtungsteil den zweiten Vorrichtungsteil "aufweist" und nicht notwendigerweise anordnungsmäßig umschließt, wenn es sich nicht beispielsweise um eine Beschreibung einer lagemäßigen und formenmäßigen Anordnung handelt; das Gleiche gilt für ein Verfahren, das einen oder mehrere Verfahrensschritte umfassen kann.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezugszeichenliste

- 21: Kameraeinheiten
- 1a: Kamerasensor
- 1b: erste Verstelleinheit
- 2: Abwehrsignalsendeeinheiten
- 2a: Lautsprechereinheit
- 2b: zweite Verstelleinheit
- 3: Objekt
- 4: Signalnetzwerk
- 5: Recheneinheit
- 10: Windkraftanlageeinheit
- 11: Anlagenraum
- 12: Bodengebiet der Industrieanlage
- 13: Überwachungsraum
- 21 - 26: erste - sechste Abwehrsignalsendeeinheit 2
- P1: Position 1
- P2: Position 2
- I: erster repetitiver Verarbeitungsschritt I
- II: zweiter repetitiver Verarbeitungsschritt II
- III: dritter repetitiver Verarbeitungsschritt III
- R1: erster Rotationswinkel um die Senkrechte
- R2: zweiter Rotationswinkel um die Senkrechte
- S1: erster Schwenkwinkel zur Senkrechten
- S2: zweiter Schwenkwinkel zur Senkrechten

## Patentansprüche

1. Abwehrsystem zu einem Erfassen und Abwehren von Objekten (3) in einem Überwachungsraum (13) um eine Industrieanlage herum, umfassend:
a) eine Vielzahl an Kameraeinheiten (1), die über einem Bodengebiet (12) der Industrieanlage verteilt sind und mit ihrem jeweiligen Bildbereich insgesamt den Überwachungsraum (13) abdecken und jeweilige Bilddaten erzeugen;
b) eine Vielzahl an Abwehrsignalsendeeinheiten (2), die über dem Bodengebiet (12) der Industrieanlage verteilt sind und jeweilige Steuersignale empfangen und in energiereichere Abwehrsignale umsetzen; und
c) eine Recheneinheit (5), die die Bilddaten empfängt und die jeweiligen Steuersignale ausgibt, Folgendes umfassend:
d) eine Erkennungs-Applikation, die ausgebildet ist, aus den Bilddaten das jeweilige Objekt (3) und dazugehörige Objektmerkmale zu erkennen, wie eine Position, eine Form, eine Größe und eine Flugrichtung;
e) eine Klassifikations-Applikation, die ausgebildet ist, zum jeweiligen Objekt (3) aus den dazugehörigen Objektmerkmalen eine jeweilige Objektart von einer Vielzahl an Objektarten zu bestimmen, und das jeweilige Objekt (3) in Abhängigkeit von der Objektart als relevant oder nichtrelevant zu einem Abwehren des Objekts (3) zu klassifizieren; und
f) eine Abwehr-Applikation, die ausgebildet ist, den als relevant klassifizierten Objekten (3) in Abhängigkeit von der jeweiligen Objektart ein oder mehrere jeweilige Abwehrsignalsendeeinheiten (2) zuzuordnen und jeweilige Steuersignale für die Abwehrsignale zu erzeugen.

2. Abwehrsystem gemäß Anspruch 1, wobei die Vielzahl der Kameraeinheiten (1) über mindestens 50% oder 75% des Bodengebiets (12) der Industrieanlage verteilt sind.

3. Abwehrsystem gemäß Anspruch 1 oder 2, wobei die Abwehrsignalsendeeinheiten (2) Lautsprecher oder Arrays von jeweiligen Lautsprechern umfassen, und die Abwehr-Applikation ausgebildet ist, die jeweiligen Lautsprecher der zugeordneten Abwehrsignalsendeeinheiten (2) so phasenversetzt zueinander anzusteuern, dass interferenzmäßig insgesamt eine Richtcharakteristik und eine Intensität eines jeweiligen Schalls so gebildet wird, dass das jeweilige Abwehrsignal am zugehörigen Objekt (3) oder die jeweiligen Abwehrsignale an einer Gruppe der Objekte (3) erzeugt werden.

4. Abwehrsystem gemäß einem der vorstehenden Ansprüche 1 - 3, wobei die Abwehrsignalsendeeinheiten (2) Mikrowellen- und/oder Radiowellensender umfassen, und die Abwehr-Applikation ausgebildet ist, die jeweiligen Microwellen- und/oder Radiosender der zugeordneten Abwehrsignalsendeeinheiten (2) so anzusteuern, dass eine jeweilige Senderichtung und Intensität einer jeweiligen elektromagnetischen Strahlung so erzeugt wird, dass das jeweilige Abwehrsignal am zugehörigen Objekt (3) oder jeweilige Abwehrsignale an einer Gruppe der Objekte (3) erzeugt werden.

5. Abwehrsystem gemäß einem der vorstehenden Ansprüche 1 - 4, wobei die Abwehrsignalsendeeinheiten (2) mindestens einen Laser umfassen, und die Abwehr-Applikation ausgebildet ist, die jeweiligen Laser der zugeordneten Abwehrsignalsendeeinheiten (2) so anzusteuern, dass die Laserstrahlung mit einer Intensität und Richtung erfolgt, dass das jeweilige Abwehrsignal am zugehörigen Objekt (3) oder jeweilige Abwehrsignale einer Gruppe der Objekte (3) erzeugt werden.

6. Abwehrsystem gemäß einem oder mehreren der vorstehenden Ansprüche, wobei die Klassifikations-Applikation ausgebildet ist, aus den Bilddaten, die eine Videosequenz bilden, bewegliche Teile des jeweiligen Objekts (3) relativ dazu zu bestimmen, eine Bewegungsfrequenz der beweglichen Teile des Objekts (3) zu bestimmen, und die Bewegungsfrequenz bei der Klassifikation der Objektart mit zu berücksichtigen.

7. Abwehrsystem gemäß Anspruch 6, wobei als die beweglichen Teile des jeweiligen Objekts (3) Flügel in Bezug zu einem Körperrumpf und als die Bewegungsfrequenz dementsprechend eine Flügelschlagfrequenz bestimmt werden, wobei die Flügelschlagfrequenz bei der Klassifizierung der Objektart mit berücksichtigt wird.

8. Abwehrsystem gemäß einem oder mehreren der vorstehenden Ansprüche, wobei die Klassifikations-Applikation ausgebildet ist, aus den Bilddaten, die eine Videosequenz bilden, Bildveränderungen des jeweiligen Objekts (3) und eine davon abgeleitete Bildveränderungsfrequenz der Bildveränderungen zu bestimmen, und die Bildveränderungsfrequenz bei der Klassifikation der Objektart mit zu berücksichtigen.

9. Abwehrsystem gemäß einem oder mehreren der vorstehenden Ansprüche, wobei die Erkennungsapplikation ausgebildet ist, zu einem jeweiligen Objekt (3) ein Sich-Annähern an die oder ein Sich-Entfernen von der Industrieanlage zu bestimmen, und die Abwehr-Applikation ausgebildet ist, den als relevant klassifizierten Objekten (3), die sich annähern, ein intensitätsmäßig zeitlich anschwellendes Abwehrsignal und bei den Objekten (3), die sich entfernen ein intensitätsmäßig zeitlich abschwellendes Abwehrsignal zuzuordnen.

10. Abwehrsystem gemäß einem oder mehreren der vorstehenden Ansprüche, wobei die Abwehr-Applikation ausgebildet ist, den relevanten Objekten (3) das jeweilige Abwehrsignal in Abhängigkeit von der zugehörigen Objektart zuzuordnen, wobei das Abwehrsignal einen oder mehrere folgender Signalparameter umfasst, wie eine Signalfrequenz, eine Tonabfolge, mehrere Tonabfolgen, eine Tonhöhe, eine anschwellende Signalintensität, eine abschwellende Signalintensität.

11. Abwehrsystem gemäß einem oder mehreren der vorstehenden Ansprüche, wobei die Erkennungs-Applikation ausgebildet ist, in einer Gruppe von Objekten (3) ein erstes Objekt (3) zu identifizieren, das der Gruppe von Objekten (3) in einer gemittelten Flugrichtung der Gruppe der Objekte (3) leitvogelartig vorausfliegt, wobei die Abwehr-Applikation das mindestens eine Abwehrsignal für das erste Objekt (3) bestimmt und erzeugt.

12. Abwehrsystem gemäß einem oder mehreren der vorstehenden Ansprüche, wobei die Abwehr-Applikation bei der Erzeugung der Abwehrsignale vorbestimmte Bereiche ausspart oder mit einer Intensität bestrahlt, die unterhalb eines jeweiligen vorbestimmten Schwellwerts für den jeweiligen Bereich liegen.

13. Verfahren zu einem Abwehren von Objekten (3) in einem Überwachungsraum (13) um eine Industrieanlage herum, folgende Schritte umfassend:
a) Installieren mindestens einer Kameraeinheit (1) über einem Bodengebiet (12) der Industrieanlage, die zu einer Überwachung des Überwachungsraums (13) Bilddaten erzeugt;
b) Installieren mindestens einer Abwehrsignalsendeeinheit (2) über dem Bodengebiet (12) der Industrieanlage, die jeweilige Steuersignale in energiereichere Abwehrsignale umsetzt;
c) Mit einer rechnergestützten Erkennungs-Applikation aus den Bilddaten bestimmen des darin abgebildeten jeweiligen Objekts (3) mit dazugehörigen Objektmerkmalen, wie einer Position, einer Form, einer Größe und einer Flugrichtung;
d) Mit einer rechnergestützten Klassifikations-Applikation bestimmen einer jeweiligen Objektart aus einer Vielzahl an Objektarten für das jeweilige Objekt (3) in Abhängigkeit von den dazugehörigen Objektmerkmalen, und klassifizieren des jeweiligen Objekts (3) in Abhängigkeit der Objektart als relevant oder nichtrelevant zu einem Abwehren des Objekts (3);
e) Mit einer rechnergestützten Abwehr-Applikation zuordnen von einer oder mehreren jeweiligen Abwehrsignalsendeeinheiten (2) und erzeugen eines jeweiligen Abwehrsignals zu dem als relevant klassifizierten Objekt (3) in Abhängigkeit der jeweiligen Objektart und weiterleiten des jeweiligen Abwehrsignals an die mindestens eine Abwehrsignalsendeeinheit (2).

14. Verfahren zum Abwehren von Objekten (3) gemäß Anspruch 13, wobei die Erkennungs-Applikation eine Gruppe von Objekten (3), die im Wesentlichen in einer Flugrichtung fliegen, und davon ein erstes Objekt (3), das der Gruppe der Objekte (3) leitvogelartig vorausfliegt, erkennt, und die Abwehr-Applikation das mindestens eine Abwehrsignal im Wesentlichen für das erste Objekt (3) bestimmt und mindestens ein entsprechendes Steuersignal dafür erzeugt.

15. Verfahren zum Abwehren von Objekten (3) gemäß Anspruch 13, wobei die Klassifikations-Applikation aus den Bilddaten, die eine Videosequenz bilden, bewegliche Teile des jeweiligen Objekts (3) relativ zum Objekt (3) bestimmt und eine Bewegungsfrequenz der beweglichen Teile des Objekts (3) bestimmt, und wobei von der Klassifikations-Applikation die Bewegungsfrequenz bei der Bestimmung der Objektart berücksichtigt wird.
